# EUROPEAN PATENT APPLICATION

(11) **EP 3 321 120 A1**
(43) Date of publication of application: **16.05.2018**
(21) Application number: 16460083.5
(22) Date of filing: 14.11.2016
(51) Int. Cl.: B60L 11/18, H02J 7/34

(54) **A CHARGING POWER FEEDING SYSTEM FOR ELECTRIC VEHICLE STATION**

(71) Applicant: ABB Schweiz AG, 5400 Baden (CH)
(72) Inventor: Uramek, Andrzej, 30-109 Krakow (PL); Molinski, Grzegorz, 64-510 Wronki (PL); Boratyn, Arkadiusz, 37-555 Sosnica (PL); Borkowski, Michal, 30-363 Krakow (PL); Miskiewicz, Milosz, 30-392 Krakow (PL); Dusak, Piotr, 32-050 Skawina (PL); Antoniewicz, Patrycjusz, 30-611 Krakow (PL)
(74) Representative: Chochorowska-Winiarska, Krystyna

(57) **Abstract**

The subject of the invention is a charging power feeding system for electrical vehicle station (14) where the electric vehicle charging power is coming from on overhead contact line (5) of traction power system. At least one of an electric vehicule charger (10) is powered from an overhead contact line (5) of a power grid (1) through an unidirectional DC/DC convereter (9) connected to the overhead contact line (5). Between a DC/DC converter (9) and the electric vehicule charger (10) a local auxilary power distribution system (12) is connected for supplying an additionl portion of an electric energy to at leat one electrical auxilary load device (13) connected to the auxilay power distribution system (12).

## Description

The subject of the invention is a charging power feeding system for electrical vehicle station where the electric vehicle charging power is coming from on overhead contact line of traction power system.

There is known from Korean patent KR 101437349 a charging power feeding system for electric vehicle. The invention relates to a railway-connected electric vehicle charging power system based on a multi-functional energy storing device. The system comprises: a multi-functional charging device directly connected to an electric vehicle charging system to supply pre-charged power to an electric vehicle, and receive power from a battery of the electric vehicle in a railway power peak or an emergency for charge. A bidirectional converter is connected to a feeder bus line to control a charge of regenerated energy generated in a direct feeder system, and supplies charge power of the multi-functional charging device to the direct feeder system if voltage descent of the direct feeder system becomes great. A bypass switch is directly connected to the multi-functional charging device and the electric vehicle charging system and switches to supply the regenerated energy generated in the direct feeder system to the electric vehicle, and switches to directly supply power of the regenerated energy to the electric vehicle charging system if the multi-functional charging device are fully charged. This solution provides a multi-functional charging device which stores regenerated energy and new and renewable energy connected to the electric vehicle charging system to supply power to charge an electric vehicle, thereby storing power through the regenerated energy generated in the railway. The new and renewable energy source charging under the power in an existing alternating current power network at night (time when not operating the railway). So the solution of electric vehicle charging consists of the charger supplied from power grid and has been expanded by additional bidirectional converter with energy storage and bypass switch to provide supplementary charging path from traction grid. This allows to utilize fluctuations of traction lines (due to starting and breaking of the trains/trams) and control the power flow through the bidirectional converter from traction lines to energy storage and black. The drawbacks of this solution is that the electric vehicle chargers are mainly supplied from the power grid what requires AC installation having a transformer and a rectifier for directly supplying the electric vehicle charger from AC power grid. Additionally installation locations of electric vehicle chargers are limited to places where high-capacity AC grid is provided by grid operator. Another drawback is a big dimension of AC installation having the transformer and rectifier which may limit installation possibilities in highly urbanized areas.

The essence of the charging power feeding system for electrical vehicle station in which at least one of an electric vehicule charger is powered from an overhead contact line of a power grid through a unidirectional DC/DC convereter connected to the overhead contact line, it that between a DC/DC converter and the electric vehicule charger a local auxilary power distribution system is connected for supplying an additionl portion of an electric energy to at leat one electrical auxilary load device connected to the auxilary power distribution system.
Preferably to the local auxilary power distribution system an energy storage system is connected for providing means of storing electrical energy and supplying this energy to any of the electric vehicle chargers or electrical auxiliary load devices.
Preferably between at least one of the electrical auxilary load device and at least one of the the electric vehicle charger a communication link is provided for exchanging process information and managing power distribution between the electrical auxiliary load device and the electric vehicle charger.
Preferably between the the electric vehicle charger and any number of other electric vehicle chargers a communiucation link is provided for exchanging process information and managing power distribution between the the electric vehicle charger and any number of other electric vehicle chargers.
Preferably between the energy storage system and the electric vehicle charger a communication link is provided for controlling charge and discharge process of energy storage system based on requests from electric vehicle charger.

Preferably the unidirectional DC/DC convereter is connected to the overhead contact line through a connection point placed in near the tram/bus stops of the public transport infrastructure lines.
Alternatively the unidirectional DC/DC convereter is connected to the overhead contact line through a connection point placed in tram loops of the public transport infrastructure lines.
Preferably the electrical auxiliary load device is adapted for converting direct DC voltage to alternating AC voltage for general usage outside of the charging station.
Preferably the unidirectional DC/DC converter is an isolated DC/DC converter.

The system according to the invention allows for placement of regular EV chargers in locations with limited AC grid availability for example insufficient supply power, lack of AC installation, etc. The invention allows for localization of EV chargers near the bus or tram stops or loops or depots.
The invention allows connection of external loads to regulated DC voltage - for example in remote areas where low-voltage AC grid is not available.
The system according to the invention allows for usage of energy storage systems for providing means of storing excessive electrical energy and supplying EV charger with this energy during periods of high demand or low availability of charging power thanks to the usage of unidirectional DC/DC converter and provision of local auxiliary supply system.
The invention allows for adaptation of EV charger such that there is no need of provision of galvanic isolation within EV charger thanks to possible usage of isolated DC/DC converter. Additionally, EV charger can be simplified by adapting for DC supply operation thanks to usage of unidirectional converter.
The invention allows for smaller costs and dimensions by utilizing small unidirectional converter in place of big AC transformer and rectifier connected to AC power grid.

The system according to the invention is presented schematically on the drawing, where:

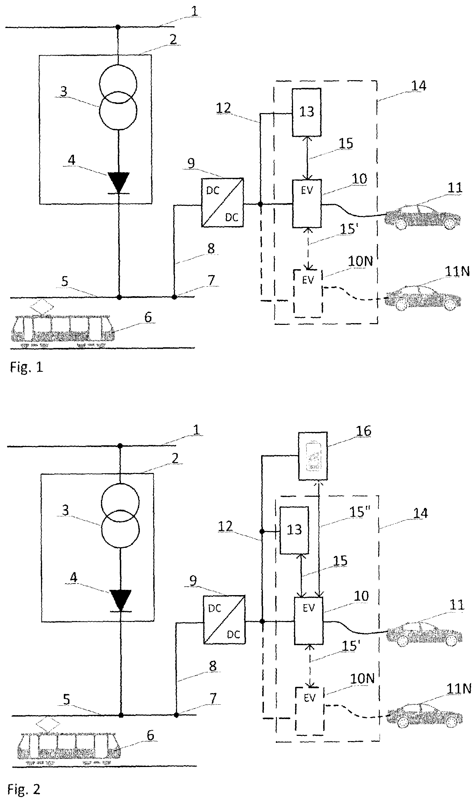

fig. 1 shows the charging power feeding system for electrical vehicle station in the first embodiment of the invention, and fig.2 shows the charging power feeding system for electrical vehicle station in the second embodiment of the invention.

A charging power feeding system comprises a power grid 1 connected through a traction substation 2, having a traction transformer 3 anf a traction recifier 4 connected in series, with an overhead contact line 5. To the overhead contact line 5 a rail electric vehicles 6 of a public transport are connected. The overhead line 5 is equipped with a connection point 7 to which a line branch 8 is connected, equipped with an unidirectional DC/DC converter 9. The output of the converter 9 is connected with an input of a known electric vehicle charger 10 (EV charger) for charging the the known electric vehicle 11. In some cases multiple EV chargers 10N (N is a natural number) can be connected to output of the converter 9 for providing possibility of simultaneous charging of multiple electric vehicles 11 N. The undirectional DC/DC converter 9 is adapted to convert unregulated DC voltage of the overhead contact line 5 into the regulated, low DC output voltage. Additionally, to the output of the converter 9 a local auxilary power distribution system 12 is connected between a DC/DC converter 9 and the charger 10, for supplying an additional portion of an electric energy to the electrical auxilary load device 13. Such device or devices 13 are provided for facilitating the design of the charger 10 or it could be additional independent electric device for inreasing the utility of a charger station 14 where more than one charger 10 is placed. For example the device 13 could be payment machine for providing payments for charging session or ticket machine for parking lot or light pole for surrounding area. Such device or devices 13 can be adapted for converting direct DC voltage to alternating AC voltage for general usage outside of the charging station 14.

The charger station 14 is equipped with a communication link 15 to communicate at least one charger 10 with at least one of the electrical auxilary load device 13. The communication link 15 is provided for exchanging process information and managing power distribution between the electrical auxiliary load device (13) and the electric vehicle charger (10) in a known way. In the charger station 14 the communication link 15' is provided for exchanging process information and managing power distribution between the the electric vehicle charger (10) and any number of other electric vehicle chargers (10N) in a known way.
In the second embodiment of the invention to the local electrical power distribution system 12 an energy storage system 16 is connected for providing means of storing excessive electrical energy available at output of DC/DC converter 9 and supplying EV charger 10 with this energy during periods of high demand of charging power or low availability of DC/DC converter 9 power.The energy storage system 16 could be composed of a battery module or bank of batteries. Alternatively it can be composed of bank of capacitors or supercapacitors or other means of storing electrical energy such as fuel cells. The energy storage system is electrically connected with at least one of the auxilary load device 13 or with a charger 10 or with both.
The energy storage system 16 can provide additional power to electric vehicle charger 10 or can accumulate exccessive energy from DC/DC converter 9 in its battery or capacitor cells.
The energy storage system 16 is provided for facilitating the design of the single EV charger 10 or the charger station 14. The energy storage system 16 could be inserted for inreasing the utilization into the charger station 14 where more than one charger 10 is placed. The energy storage system could be inserted into charger station 14, what is not presented in the drawing. The storage system 16 is connected with at least one of electric vehicle chargers 10 or 10N through a communication link 15". The communication link 15" is provided for controlling charge and discharge process of energy storage system 16 based on requests from electric vehicle charger 10 in a known way.

In both embodiment of the invention the the connection point 7 with the line branch 8 is situated in such places where the infrastructure of public transport lines are well developed. So DC/DC convereter 10 is placed advantageusly in tram loops and/or near the tram/train stops for facilitation the use of the EV charger 10, what is not presented in the drawing.

In both embodiments of the invention for supplying the EV charger 10, the only existing traction transformer 3 and traction rectifier 4 from traction substation 2 is utilized so there is no need for use a separate transformer with rectifier for directly supplying the electric vehicle charger from AC power grid. Additionally existing traction substation can provide power according its overload class rating and therefore provide maximum utilization of infrastructure for the needs of traction power supply and EV charger needs. Such solution is simple and not costly.
Usage the local auxilary power distribution system 12 connected between a DC/DC converter 9 and the EV charger 10 solves problem with direct connection of EV charger 10 to the overhead contact line 5, including low voltage rating of converters utilized in attached loads embedded overvoltage transient protection, which is realized in DC/DC converter 9 and is not required in loads connected to local auxiliary power distribution system 12.
In both embodiments of the invention the electrical auxiliary load device 13 is adapted for converting direct DC voltage to alternating AC voltage for general usage outside of the charging station 14.
In both embodiments of the invention the unidirectional DC/DC converter 9 is an isolated DC/DC converter.

## Claims

1. A charging power feeding system for electrical vehicle station in which at least one of an electric vehicule charger (10) is powered from an overhead contact line (5) of a power grid (1) through an unidirectional DC/DC convereter (9) connected to the overhead contact line (5), **characterized in that** between a DC/DC converter (9) and the electric vehicule charger (10) a local auxilary power distribution system (12) is connected for supplying an additionl portion of an electric energy to at leat one electrical auxilary load device (13) connected to the auxilary power distribution system (12).

2. A system according to claim 1, **characterized in that** to the local auxilary power distribution system (12) an energy storage system (16) is connected for providing means of storing electrical energy and supplying this energy to any of the electric vehicle chargers (10) or electrical auxiliary load devices (13).

3. A system according to claims 1-2, **characterized in that** between at least one of the electrical auxilary load device (13) and at least one of the the electric vehicle charger (10) a communiucation link (15) is provided for exchanging process information and managing power distribution between the electrical auxiliary load device (13) and the electric vehicle charger (10).

4. A system according to claims 1-2, **characterized in that** between the the electric vehicle charger (10) and any number of other electric vehicle chargers (10N) a communiucation link (15') is provided for exchanging process information and managing power distribution between the the electric vehicle charger (10) and any number of other electric vehicle chargers (10N).

5. A system according to claim 2, **characterized in that** between the energy storage system (16) and the electric vehicle charger(10) a communication link (15") is provided for controlling charge and discharge process of energy storage system (16) based on requests from electric vehicle charger (10).

6. A system according to any of the previous claims, **characterized in that** the unidirectional DC/DC convereter (9) is connected to the overhead contact line (5) through a connection point (7) placed in near the tram/bus stops of the public transport infrastructure lines.

7. A system according to any of the previous claims, **characterized in that** the unidirectional DC/DC convereter (9) is connected to the overhead contact line (5) through a connection point (7) placed in tram loops of the public transport infrastructure lines.

8. A system according to any of the previous claims, **characterized in that** the electrical auxiliary load device (13) is adapted for converting direct DC voltage to alternating AC voltage for general usage outside of the charging station (14).

9. A system according to any of the previous claims, **characterized in that** the unidirectional DC/DC converter (9) is an isolated DC/DC converter.
